# EUROPÄISCHE PATENTANMELDUNG

(11) **EP 1 125 693 A1**
(43) Veröffentlichungstag der Anmeldung: **22.08.2001**
(21) Anmeldenummer: 00102940.4
(22) Anmeldetag: 14.02.2000
(51) Int. Cl.: B25J 9/16, B25J 17/02

(54) **Parallelkinematisches System**

(71) Anmelder: FESTO AG & Co, 73734 Esslingen (DE)
(72) Erfinder: Neumann, Rüdiger, 73760 Ostfildern (DE)
(74) Vertreter: Abel, Martin, Dipl.-Ing.

(57) **Zusammenfassung**

Die Erfindung betrifft ein parallelkinematisches System sowie eine Steuereinrichtung und ein Programm-Modul hierfür sowie ein Verfahren zum Betrieb des Systems, bei dem zumindest zwei Aktuatoren (10, 11, 12) parallelkinematisch positionierend auf eine Endeffektor-Vorrichtung (13) wirken und jeweils mit dieser durch Verbindungsmittel (20a, 21a, 23a - 26a) in zumindest zwei Bewegungsfreiheitsgraden gelenkig verbunden sind und bei dem die Aktuatoren jeweils einen durch einen Stator (15a,15b, 15c) entlang einer Längsbewegungsachse geführten Läufer (14a, 14b, 14c) aufweisen. Dazu wird vorgeschlagen, dass pro Aktuator jeweils kontinuierlich wirkende Stellmittel (27, 52a, 57a) zur Beeinflussung einer fluidischen Antriebswirkung auf den jeweiligen Läufer (14a, 14b, 14c) vorgesehen sind, dass dessen Position durch Positionserfassungsmittel (30a, 51a) erfasst wird, und dass eine Steuereinrichtung (40) die Stellmittel in Abhängigkeit der Positionen der Läufer so steuert, dass die Endeffektor-Vorrichtung (13) durch Positionieren der Läufer positioniert wird. Das parallelkinematische System ist kostengünstig und erlaubt eine exakte Positionierung.

## Beschreibung

Die Erfindung betrifft ein parallelkinematisches System, bei dem zumindest zwei Aktuatoren parallelkinematisch positionierend auf eine Endeffektor-Vorrichtung wirken und jeweils mit dieser durch Verbindungsmittel in zumindest zwei Bewegungsfreiheitsgraden gelenkig verbunden sind und bei dem die Aktuatoren jeweils einen durch einen Stator entlang einer Längsbewegungsachse geführten Läufer aufweisen.

Die Erfindung betrifft ferner ein Verfahren zum Betreiben eines parallelkinematischen Systems der obengenannten Art sowie eine Steuereinrichtung und ein Programm-Modul jeweils für ein parallelkinematisches System der obengenannten Art.

Für einen Einsatz auf dem Gebiet der Fertigungstechnik sowie in zunehmendem Maße auf dem Gebiet der Handhabungstechnik sind parallelkinematische Systeme bekannt. Bei einem parallelkinematischen System sind im Unterschied zu seriellen Systemen die angetriebenen Achsen nicht seriell einander zugeordnet, sondern greifen parallel an einer zu bewegenden Vorrichtung, beispielsweise einem Greifer an. Beispiele für seriell-kinematisch aufgebaute Systeme sind Knickarmroboter oder SCARA-Roboter (SCARA = Selective Compliance Assembly Robot). Da bei serieller Kinematik der an einer Achse jeweils angeordnete Antrieb oder Antriebs-Übertragungseinrichtung für einen Antrieb durch die jeweils seriell vorgeschalteten Antriebsachsen bewegt werden muss, sind serielle Kinematiken meist schwer und langsam.

Bei einem parallelkinematischen System hingegen ist das Verhältnis zwischen Eigenmasse des Systems, insbesondere der bewegten Anteile des Systems und des durch das System zu bewegenden Gegenstandes, sehr viel günstiger, was eine hohe Arbeitsgeschwindigkeit sowie gute Antriebswirkungsgrade zur Folge hat. Typische parallelkinematische Systeme sind beispielsweise in dem US-amerikanischen Patent 4,976,582 beschrieben. Dort werden beispielsweise Drehantriebe zum Antrieb der jeweiligen Antriebsachsen eingesetzt, mit denen Parallelstab-Fußpunkte auf einem Kreisbogen bewegt werden. Alternativ sind als "Motoren" bezeichnete Linearantriebe vorgesehen, die über Verstärker durch einen Steuercomputer überwacht und gesteuert werden. Es werden also elektrische Antriebe eingesetzt. Diese sind jedoch teuer und aufgrund der zu beschleunigenden und zu bewegenden Massen teilweise auch träge.

Es ist daher Aufgabe der vorliegenden Aufgabe, ein kostengünstiges parallelkinematisches System zu schaffen, das eine hohe Positioniergenauigkeit aufweist.

Diese Aufgabe wird gelöst durch ein parallelkinematisches System der eingangs genannten Art, wobei die Aktuatoren als durch fluidische Antriebswirkung angetriebene Antriebe ausgebildet sind, wobei pro Aktuator jeweils kontinuierlich wirkende Stellmittel zur Beeinflussung der fluidischen Antriebswirkung auf den Läufer vorgesehen sind, wobei pro Aktuator Positionserfassungsmittel zur Erfassung der Position des Läufers vorgesehen sind und wobei eine Steuereinrichtung zur Steuerung der Stellmittel in Abhängigkeit von den jeweiligen von den Positionserfassungsmitteln erfassten und an die Steuereinrichtung gemeldeten Positionen der Läufer vorgesehen sind, so dass die Endeffektor-Vorrichtung durch Positionieren der Läufer relativ zu den ihnen zugeordneten Statoren positionierbar ist.

Die Aufgabe wird ferner gelöst durch ein Verfahren gemäß der technischen Lehre des Anspruchs 17, eine Steuereinrichtung gemäß der technischen Lehre des Anspruchs 19 sowie ein Programm-Modul gemäß der technischen Lehre des Anspruchs 20.

Der Erfindung liegt dabei der Gedanke zugrunde, ein parallelkinematisches System mit fluidtechnischen, insbesondere mit pneumatischen Antrieben auszurüsten. Die Läufer dieser Antriebe können erfindungsgemäß jedoch nicht nur zwischen den jeweiligen Endpositionen in den sie jeweils führenden Statoren im sogenannten "Punkt-zu-Punkt"-Modus verfahren werden, sondern beliebige Zwischenpositionen einnehmen, weisen also ein sogenanntes Bahnfolgeverhalten auf. Dazu sind jedem Antrieb Stellmittel, insbesondere jeweils zumindest ein Proportionalventil zugeordnet, über das die fluidtechnische Antriebswirkung auf den jeweiligen Läufer, insbesondere die Wirkung von Druckluft kontinuierlich, das heißt stetig, einstellbar ist. Die Stellmittel werden durch eine Steuereinrichtung, z.B. eine Mikroprozessorsteuerung, in Abhängigkeit der von Erfassungsmitteln, z.B. von Sensoren, erfassten Positionen der Läufer so angesteuert, dass die jeweiligen Läufer vorbestimmte Positionen in den Statoren einnehmen und damit über die Positionierung der Läufer die sogenannte Endeffektor-Vorrichtung positioniert wird. An der Endeffektor-Vorrichtung ist beispielsweise ein Greifer, ein Bohrer, eine Ansaugvorrichtung oder eine sonstige Handhabungs- und/oder Antriebsvorrichtung angeordnet. Die eingesetzten pneumatischen Antriebe sind kostengünstig und erlauben eine präzise Positionierung bei geringen Bahn-Konturfehlern während des Verfahrvorgangs der Endeffektor-Vorrichtung, so dass sogenannte "Pick-and-Place"-Aufgaben wie auch sogenannte "Bahnaufgaben" durch das erfindungsgemäße parallelkinematische System gelöst werden können. Dabei sind hohe Beschleunigungs- und Geschwindigkeitswerte zu erzielen, da die bewegte Masse der fluitechnischen Antriebe verhältnismäßig gering ist.

Weitere vorteilhafte Ausgestaltungen der Erfindung finden sich in den abhängigen Ansprüchen sowie in der Beschreibung.

Zweckmäßigerweise steuert die Steuereinrichtung die Stellmittel so an, dass die Endeffektor-Vorrichtung bei ihrer bedarfsgemäßen Positionierung eine definierte Bahnkurve durchläuft, die Endeffektor-Vorrichtung also Zwischenpositionen in einer vorbestimmten zeitlichen Abfolge überfährt. Damit kann sichergestellt werden, dass die Endeffektor-Vorrichtung nicht mit eventuell in ihrem Arbeitsbereich befindlichen Gegenständen kollidiert.

Ferner überwacht die Steuereinrichtung die Aktuatoren vorteilhafterweise dahingehend, dass die Endeffektor-Vorrichtung zwar so stark wie möglich, jedoch nicht übermäßig beschleunigt oder abgebremst wird, beispielsweise wenn ein mit Flüssigkeit gefülltes Gefäß durch die Endeffektor-Vorrichtung transportiert wird. Ferner kann die Steuereinrichtung dabei auch die jeweilige Verfahrgeschwindigkeit der Endeffektor-Vorrichtung kontrollieren und steuern.

In einer vorteilhaften Weiterbildung der Erfindung bilden die Statoren beziehungsweise Gehäuse der Aktuatoren tragende Bauteile des Vorrichtungsgestells des parallelkinematischen Systems, so dass an sich für den Aufbau eines Gestelles notwendige Gestellbauteile entfallen können und eine besonders leichte und kostengünstige Konstruktion entsteht.

In einer bevorzugten Variante ist die Steuereinrichtung modular aufgebaut und weist dabei beispielsweise ein Zentral-Steuermodul sowie dezentrale, den jeweiligen Antrieben zugeordnete, sogenannte Achsreglermodule auf. Die Achsreglermodule stellen dann von dem Zentral-Steuermodul vorgegebene Positionen der jeweiligen Läufer ein und korrigieren gegebenenfalls Abweichungen der Positions-Ist-Werte von durch das Zentral-Steuermodul vorgegebenen Positions-Soll-Werten. Es ist jedoch auch möglich, dass die Steuereinrichtung als zentrale Steuereinrichtung ausgebildet ist und eine von der Steuereinrichtung eingesetzte Software in der oben beschriebenen Weise modular aufgebaut ist.

Zweckmäßigerweise wird nicht nur die Position der jeweiligen Läufer erfasst, sondern es sind auch Krafterfassungsmittel vorgesehen, die die jeweiligen auf die Aktuatoren, insbesondere auf deren Läufer einwirkenden Kräfte erfassen. Dadurch wird es beispielsweise möglich, dass über die Endeffektor-Vorrichtung auf den jeweiligen Aktuator einwirkenden Rückwirkungskräfte erfasst werden und durch eines der erwähnten Achsreglermodule und/oder durch das Zentral-Steuermodul kompensiert werden.

In einer weiteren vorteilhaften Variante der Erfindung ermittelt die Steuereinrichtung, insbesondere das Zentral-Steuermodul, inwieweit Nichtlinear-Kräfte, insbesondere Gravitationskräft, Zentrifugalkräfte, Corioliskräfte und Koppelkräfte, auf die Endeffektor-Vorrichtung einwirken und steuern die Stellmittel, diese Nichtlinear-Kräften gegebenenfalls kompensierend, an. Dazu wird vorteilhafterweise in Fortsetzung der modularen Vorgehensweise innerhalb der Steuereinrichtung ein Kompensationsregelmodul eingesetzt. Das Kompensationsregelmodul steuert die Stellmittel zur Kompensation der Nichtlinear-Kräfte entweder direkt an oder zweckmäßigerweise indirekt über die Achsreglermodule, die dann einen entsprechend dafür vorgesehenen "Kompensationskraft-Eingang" aufweisen.

Im Folgenden werden die Erfindung und ihre Vorteile anhand von Ausführungsbeispielen unter Zuhilfenahme der Zeichnungen dargestellt. Es zeigen
- Figur 1: ein Ausführungsbeispiel eines erfindungsgemäßen parallelkinematischen Systemes sowie
- Figur 2: ein Ausführungsbeispiel einer erfindungsgemäßen Steuereinrichtung.

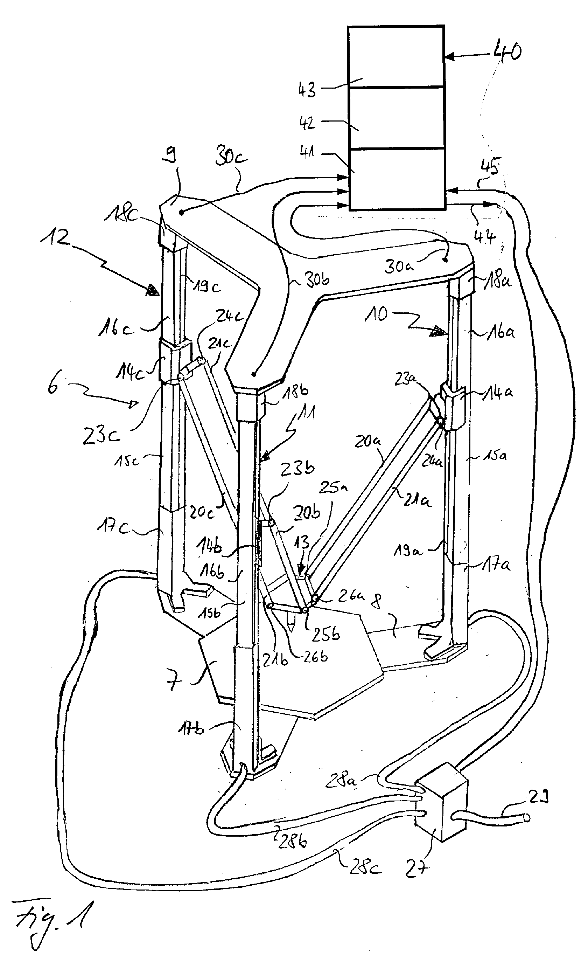

Figur 1 zeigt als Aktuatoren drei pneumatische Linearantriebe 10, 11 und 12, die säulenartig mit vertikaler Ausrichtung angeordnet sind und sich zwischen einer im Wesentlichen sternförmigen Grundplatte 8 und einer gleichartig wie die Grundplatte 8 gestalteten Deckplatte 9 solchermaßen erstrecken, dass zwischen den Längsachsen der Linearantriebe 10, 11 und 12 ein Arbeitsraum vorzugsweise in Gestalt eines regulären Prismas auf der Grundfläche eines gleichschenkligen Dreiecks aufgespannt wird. Dabei zeigen die Längsachsen der Linearantriebe 10, 11 und 12 jeweils einenends senkrecht auf die Eckpunkte des auf der Grundplatte 8 aufgespannten gleichschenkligen Dreiecks und anderenends auf die Eckpunkte des auf der Deckplatte 9 aufgespannten gleichschenkligen Dreiecks. Auf der Grundplatte 8 ist ein hexagonaler Arbeitstisch 7 angeordnet. Auf diese Weise ist ein Vorrichtungsgestell 6 des parallelkinematischen Systems definiert.

Anstelle der Grundplatte 8 und der Deckplatte 9 könnten auch andere, die Linearantriebe 10, 11 und 12 gegeneinander abstützende Stützmittel vorgesehen sein. Vorteilhaft ist jedenfalls, wenn die Linearantriebe 10, 11 und 12 wie beim Ausführungsbeispiel tragende Gestellbauteile des Vorrichtungsgestelles 6 des parallelkinematischen Systems bilden.

Es ist jedoch auch möglich, dass bei dem Vorrichtungsgestell 6 die Deckplatte 9 entfällt oder näher beieinander liegende Eckpunkte aufweist als die Grundplatte 8 und die Linearantriebe 10, 11 und 12 dann einen pyramidenförmigen oder Pyramidenstumpf-förmigen Arbeitsraum aufspannen. Ferner können die Linearantriebe 10, 11 und 12 je nach Bedarf auch beliebig andersartig angeordnet oder geneigt sein als in Figur 1. Die Linearantriebe 10, 11 und 12 können beispielsweise auch parallel nebeneinander angeordnet sein. Die Deckplatte 9 kann z.B. auch an einer Deckenfläche oder Seitenwandfläche aufgehängt sein und die Grundplatte 8 entfallen.

Der erste Linearantrieb 10 weist einen Läufer 14a auf, der durch einen Stator 15a geführt wird. Bei dem zweiten Linearantrieb 11 ist ein Läufer 14b in einem Stator 15b, bei dem dritten Linearantrieb 12 ein Läufer 14c in einem Läufer 15c geführt. Mit den Läufern 14a, 14b und 14c ist eine Endeffektor-Vorrichtung 13 verbunden, die im Folgenden nur als "Endeffektor 13" bezeichnet wird. An dem Endeffektor 13 ist beispielsweise ein Greifer, ein Bohrer oder wie im vorliegenden Fall eine pneumatische Ansaugvorrichtung angebracht, die durch Positionieren der Läufer 14a, 14b und 14c bewegt wird.

Da die Linearantriebe 10, 11 und 12 jeweils grundsätzlich gleich aufgebaut sind, wird im Folgenden nur der erste Linearantrieb 10 näher erläutert, dessen Bestandteile jeweils mit Bezugzeichen versehen sind, die aus einer Ziffer und einem an die Ziffer angefügten "a" bestehen. Jeweils den Bestandteilen des Linearantriebs 10 entsprechende Bestandteile des zweiten Linearantriebs 11 sind mit denselben Ziffern, jedoch mit einem angefügten "b", entsprechende Bestandteile des dritten Linearantriebs 12 mit einem angefügten "c" bezeichnet.

Der Stator 14a umfasst im Wesentlichen einen als langgestreckter Hohlkörper ausgeführten Profilstab 16a, der in axialer Längsrichtung einenends durch einen auf der Grundplatte 8 mit Hilfe von Winkellaschen befestigten Fuß 17a abgeschlossen und gehalten wird, anderenends durch ein mit der Deckplatte 9 verbundenes Kopfstück 18a abgeschlossen wird. Für diese Abschlusselemente wären aber auch andere Formgebungen möglich. Ferner können auch die Winkellaschen entfallen, wenn der Fuß 17a beispielsweise mit der Grundplatte 8 von deren Unterseite her verschraubt wird. Der Profilstab 16a weist im vorliegenden Fall äußerlich einen quadratischen Querschnitt auf. Im Inneren des Profilstabs 16a erstreckt sich in Längsrichtung ein in Figur 1 nicht sichtbarer Hohlraum über die gesamte Länge des Profilstabs 16a. Durch in dem Fuß 17a sowie in dem Kopfstück 18a befindliche, nicht sichtbare Ein- und Auslässe kann der Hohlraum des das Gehäuse des Linearantriebs 10 bildenden Profilstabes 16a mit Druckluft beaufschlagt werden oder entlüftet werden, so dass ein sich in dem Hohlraum des Profilstabes 16a befindlicher, in Figur 1 nicht sichtbarer Kolben in Längsrichtung des Profilstabs 16a zu dem Kopfstück 18a oder dem Fuß 17a hin bewegt wird.

An dem Kolben ist ein in Figur 1 nicht sichtbarer Mitnehmer angebracht, der aus dem Hohlraum des Profilstabes 16a durch einen sich in Längsrichtung des Profilstabes 16a erstreckenden Schlitz 19a herausragt und mit dem Läufer 14a verbunden ist. Dadurch wird der Läufer 14a zusammen mit dem Kolben bewegt. Damit aus dem Schlitz 19a keine Druckluft entweichen kann, ist dieser durch ein Dichtband abgedichtet, das durch den Mitnehmer oder den Kolben lokal abgehoben werden kann.

Der Läufer 14a ist als Schlitten mit einem z.B. L-förmigen Profil ausgeführt, wobei ein Schenkel des Profiles mit dem Mitnehmer verbunden ist und der andere Schenkel den Profilstab 16a umgreift. Der Läufer 14a wird durch eine aus Gründen der Übersichtlichkeit nicht dargestellte, an dem Profilstab 16a angeordnete Längsführung sicher und präzise geführt.

Da für den ersten Linearantrieb 10 keinerlei Bauraum erfordernde Kolbenstange notwendig ist, wird der erste Linearantrieb 10 auch als "kolbenstangenloser Linearantrieb" bezeichnet. Er kann prinzipiell von an sich bekannter Bauart sein. Es ist jedoch auch möglich, dass anstatt kolbenstangenloser Linearantriebe solche mit Kolbenstangen eingesetzt werden, insbesondere auch übliche pneumatische Zylinder. Auch Mischformen beider Antriebstypen in einem parallelkinematischen System sind ohne Weiteres möglich. Ferner kann der Läufer 14a von dem Kolben auch anstatt durch mechanische Mitnehmerwirkung auch beispielsweise durch Magnetwirkung bewegt werden, so dass die Schlitze 19a, 19b, 19c nicht notwendig sind.

Der Läufer 14a ist über parallele Verbindungsstäbe 20a und 21a mit dem Endeffektor 13 verbunden. Die Verbindungsstäbe 20a und 21a bestehen im vorliegenden Fall aus besonders leichtem, jedoch belastbarem und verwindungssteifem Kohlefasermaterial. An den Enden der Verbindungsstäbe 20a und 21a sind jeweils Kugelgelenke 23a, 24a, 25a und 26a angeordnet, mit denen die Verbindungsstäbe 20a und 21a einenends mit dem Läufer 14a und anderenends mit dem Endeffektor 13 verbunden sind. Die parallelen Verbindungsstäbe 20a und 21a sowie die Kugelgelenke 23a, 24a, 25a und 26a bilden Verbindungsmittel, mit denen der Läufer 14a in zumindest zwei Bewegungsfreiheitsgraden mit dem Endeffektor 13 gelenkig verbunden ist. Anstatt der Kugelgelenke können beispielsweise auch Kardangelenke oder sonstige Gelenkanordnungen mit zumindest zwei Bewegungsfreiheitsgraden eingesetzt werden.

Ähnlich wie der Läufer 14a sind auch die Läufer 14b und 14c durch parallele Verbindungsstäbe 20b und 21b bzw. 20c und 21c sowie durch den Kugelgelenken 23a, 24a, 25a und 26a entsprechende Kugelgelenke 23b-26b bzw. 23c-26c jeweils mit dem Endeffektor 13 verbunden. Die Verbindungsstäbe 20c und 21c sind jedoch in Figur 1 zum Teil durch die Verbindungsstäbe 20b und 21b sowie den zweiten Linearantrieb 11 verdeckt. Durch die Verwendung paralleler Verbindungsstäbe wird im vorliegenden Fall eine rotatorische Bewegung des Endeffektors 13 unterdrückt, eine translatorische Bewegung mit drei Freiheitsgraden hingegen ermöglicht.

Werden geringere Anforderungen an die Qualität der Bewegung des Endeffektors 13 oder dessen Belastbarkeit gestellt, kann beispielsweise zumindest bei einem der Linearantriebe nur ein Verbindungsstab statt der parallelen Verbindungsstäbe verwendet werden. Ferner ist es bei anderen Anforderungen an die Stabilisierung und Antriebswirkung auf den Endeffektor 13 möglich, dass einer der Linearantriebe ganz entfällt, insbesondere wenn die Ankoppelpunkte von jeweils zwei parallelen Verbindungsstäben an einem Läufer befestigt sind, oder dass einer der Linearantriebe durch eine antriebslose Anordnung aus Profilstab und Läufer ersetzt wird. Weiter können weitere, den Endeffektor 13 positionierende und stabilisierende Linearantriebe hinzukommen. Wenn nicht nur die Position des Endeffektors 13, sondern auch dessen Orientierung vorgegeben werden soll, können in einer weiteren Variante auch beispielsweise sechs Linearantriebe vorgesehen sein, die mit dem Endeffektor 13 jeweils über lediglich einen Verbindungsstab verbunden sind.

Bei der Anordnung in Figur 1 bilden die Statoren der Linearantriebe 10, 11 und 12, insbesondere deren Profilstäbe 16a, 16b, 16c bereits tragende Gestellbauteile des parallelkinematischen Systems, so dass kaum weitere Gestellbauteile notwendig sind. Die Grundplatte 8 und die Deckplatte 9 können sogar ganz entfallen, wenn die Linearantriebe 10, 11 und 12 über deren Kopfstücke 18a, 18b, 18c unmittelbar miteinander verbunden sind.

Von einer Ventilanordnung 27 führen jeweils zwei Druckluft-Verbindungen 28a, 28b und 28c zu den Füßen 17a, 17b und 17c der Linearantriebe 10, 11 und 12. In den Profilstäben 16a, 16b und 16c verlaufen integrierte Kanäle, die die Verbindung zu den jeweiligen Kopfstücken der Linearantriebe herstellen. Die Ventilanordnung 27 wird über eine Leitung 29 von einer nicht dargestellten Druckluft-Quelle mit Druckluft versorgt.

Die Ventilanordnung 27 umfasst für jeden der Linearantriebe 10, 11 und 12 Stellmittel, die die fluidische Antriebswirkung auf den jeweiligen Läufer eines Linearantriebs kontinuierlich wirkend beeinflussen. Über diese Stellmittel kann Druckluft dosiert sowohl auf Seiten der Kopfstücke 18a, 18b und 18c als auch auf Seiten der Füße 17a, 17b und 17c, also zu beiden Seiten des jeweiligen Kolbens, in die Profilstäbe 16a, 16b und 16c eingespeist werden. Ferner können über diese Stellmittel die Profilstäbe 16a, 16b und 16c sowohl auf Seiten der Kopfstücke 18a, 18b und 18c als auch auf Seiten der Füße 17a, 17b und 17c kontrolliert entlüftet werden. Dazu sind die Stellmittel jeweils pro Linearantrieb mit zumindest einem und vorzugsweise zwei Proportionalventilen, jeweils mit der Funktionalität eines 3/3-Ventiles, ausgerüstet, so dass der Druck auf Seiten des jeweiligen Kopfstückes und auf Seiten des jeweiligen Fußes jeweils individuell eingestellt werden kann. Es ist beispielsweise auch möglich, dass anstatt zweier jeweils als 3/3-Ventile funktionierender Proportionalventile ein Ventil mit der Funktionalität eines 5/3-Proportionalventiles vorgesehen ist.

Es ist jedoch grundsätzlich auch möglich, dass die Stellmittel jeweils individuell einstellbare Fördermittel aufweisen oder dass beispielsweise nur über die Füße Druckluft zugeführt wird, wobei dann die Kolben des Linearantriebe entweder durch mechanische Federn, durch sogenannte Luftfedern oder durch Schwerkraft zurückgestellt werden. Die Ventilanordnung 27 kann auch dezentral aufgebaut sein, wobei die jeweils zu einem Linearantrieb gehörenden Stellmittel auch in den Linearantrieb integriert sein können.

An den Linearantrieben 10, 11 und 12 sind jeweils in Figur 1 nicht sichtbare Positionserfassungsmittel zur Erfassung der Positionen der Läufer 14a, 14b und 14c angeordnet. Die Positionserfassungsmittel sind jeweils im Innern der Statoren 15a, 15b und 15c angeordnete Sensoren die beispielsweise durch Radar oder Ultraschall die Position der jeweiligen Läufer 14a, 14b und 14c erfassen. Die Wegemessung durch die Positionserfassungsmittel kann auch z.B. auf magnetostriktivem oder induktivem Weg erfolgen, wobei insbesondere in diesen Fällen die dazu erforderliche Sensorik auch entlang der Profilstäbe 16a, 16b und 16c angebracht sein kann.

Von den Positionserfassungsmitteln führen Meldeleitungen 30a, 30b und 30c zu einer lediglich schematisch dargestellten Steuereinrichtung 40, die die Funktionen des parallelkinematischen Systems steuert. Die Steuereinrichtung 40 weist ein Ein-/Ausgabemodul 41, einen Prozessor 42 und Speichermittel 43 auf, die jeweils durch nicht gezeigte Verbindungen untereinander verbunden sind. Die Steuereinrichtung 40 wird durch ein Betriebssystem sowie durch Software-Module betrieben, die in dem Speichermittel 43 gespeichert sind und deren Programmcode-Sequenzen durch den Prozessor 42 ausgeführt werden. Das Speichermittel 43 umfasst beispielsweise RAM-Module (RAM = Random Access Memory) für temporär zu speichernde Daten sowie Flash-Memory-Module und/oder ROM-Module (ROM = Read Only Memory) für langfristig zu speichernde Daten. Von der Steuer-einrichtung 40 führt eine Steuerleitung 44 zu der Ventilanordnung 27 zur deren Steuerung und damit zur Beeinflussung der Linearantriebe 10, 11 und 12. Über eine Meldeleitung 45 kann die Ventilanordnung 27 der Steuereinrichtung 40 aktuelle Zustände und Einstellungen rückmelden. Die Meldeleitungen 30a, 30b und 30c sowie die Steuerleitung 44 und die Meldeleitung 45 können sich auch auf einem Bus befinden.

Die Steuereinrichtung 40 erfasst die jeweiligen von den Positionserfassungsmitteln über die Meldeleitungen 30a, 30b und 30c an die Steuereinrichtung 40 gemeldeten Positionen der Läufer 14a, 14b und 14c und sendet in Abhängigkeit der jewei-ligen Positionen Steuerbefehle über die Steuerleitung 44 an die Ventilanordnung 27. Über diese werden dann die Linearantriebe 10, 11 und 12 entweder über die Füße 17a, 17b und 17c oder über die Kopfstücke 18a, 18b und 18c jeweils so mit Druckluft beaufschlagt oder entlüftet, dass die Läufer 14a, 14b und 14c in den Profilstäben 16a, 16b und 16c verfahren werden und eine durch die Steuereinrichtung 40 gewünschte Position einnehmen. Über die Läufer 14a, 14b und 14c wird auch der Endeffektor 13 entsprechend der Vorgaben der Steuereinrichtung 40 bewegt.

Die Steuereinrichtung 40 gibt jedoch für die Läufer 14a, 14b und 14c nicht nur deren jeweilige, für eine bestimmte Positionierung des Endeffektors 13 notwendige End-Position vor, sondern steuert auch das Verfahren der Läufer 14a, 14b und 14c zwischen diesen End-Positionen, so dass der Endeffektor 13 eine vorbestimmte Bahnkurve durchläuft. Auf diese Weise wird vermieden, das der Endeffektor 13 bei einem Positioniervorgang mit eventuell auf dem Arbeitstisch 7 befindlichen Gegenständen kollidiert. Ferner sorgt die Steuereinrichtung 40 durch entsprechende Ansteuerung der Ventilanordnung 27 dafür, dass der Endeffektor 13 zwar schnellstmöglich beschleunigt oder abgebremst wird, jedoch zu hohe Beschleunigungswerte vermieden werden.

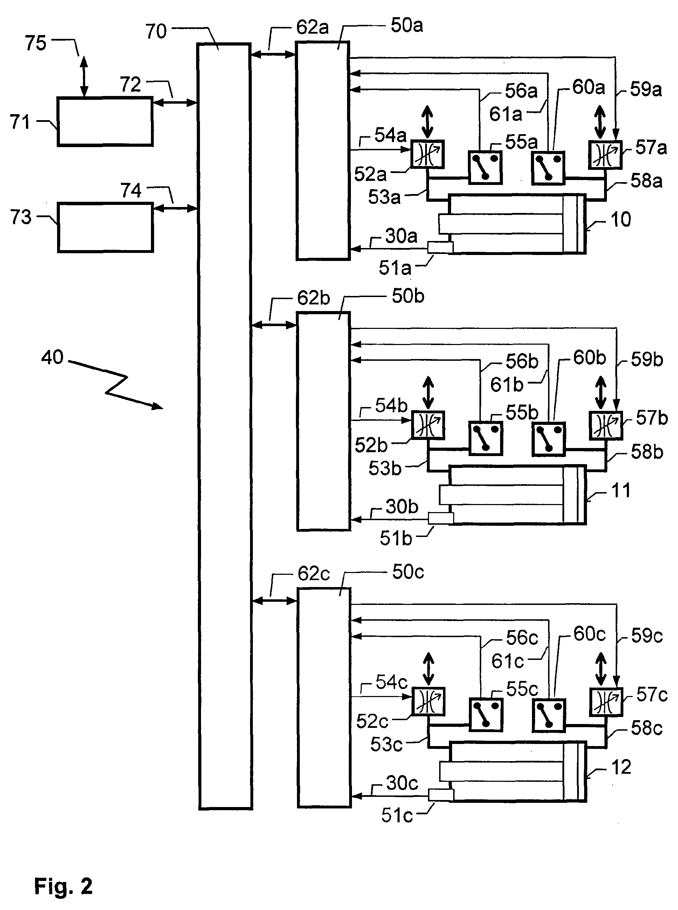

Ein beispielhafter funktionaler Aufbau der Steuereinrichtung 40 ist in Figur 2 gezeigt. Die Steuereinrichtung 40 ist in dem Ausführungsbeispiel in Figur 2 modular aufgebaut, wobei die Module als einzelne Software-Module innerhalb einer zentralen Steuereinrichtung 40 ausgebildet sein können oder als dezentrale Steuermodule, die beispielsweise an einem gemeinsamen Bus arbeiten. Solche dezentralen Steuermodule können auch ganz oder teilweise als analoge elektrische Schaltungen aufgebaut sein oder jeweils einen Prozessor, Speicher, Ein-/Ausgabebaugruppen und eine Steuerungssoftware aufweisen. Mischformen sind ebenfalls möglich.

Figur 2 zeigt die Linearantriebe 10, 11 und 12, die zur Vereinfachung der Darstellung in der oben bereits erwähnten Bauform als Arbeitszylinder mit Kolben und Kolbenstangen ausgeführt sind. Wie bereits anhand der Figur 1 praktiziert, sind auch im Folgenden dem ersten Linearantrieb 10 zugeordnete Komponenten mit einem Bezugzeichen aus einer Ziffer und einem "a" versehen, dem zweiten Linearantrieb 11 zugeordnete Komponenten entsprechend mit einer Ziffer und "b" und dem dritten Linearantrieb 12 zugeordnete Komponenten entsprechend mit einer Ziffer und "c" bezeichnet. Zur Vereinfachung werden auch in Figur 2 nur die dem ersten Linearantrieb 10 zugeordneten Komponenten erläutert.

Der erste Linearantrieb 10 wird durch ein Achsreglermodul 50a überwacht und geregelt. Die Position seines Kolbens wird durch eine Sensorik 51a erfasst und über die Meldeleitung 30a an das Achsreglermodul 50a gemeldet.

Lagerdeckelseitig wird der erste Linearantrieb 10 durch Stellmittel 52a über eine Leitung 53a mit Druckluft beaufschlagt oder entlüftet. Die Stellmittel 52a werden durch eine durch einen Doppelpfeil angedeutete Druckluft-Versorgungseinrichtung mit Druckluft versorgt. Die Stellmittel 52a sind stark vereinfachend durch ein Proportionalventil dargestellt, können jedoch auch andere proportional wirkende Ventile umfassen, insbesondere ein 3/3-Proportionalventil, so dass die Druckluft sowie eine gezielte Entlüftung steuerbar sind. Die Stellmittel 52a werden über eine Steuerleitung 54a von dem Achsreglermodul 50a gesteuert. Der lagerdeckelseitig anstehende Druck wird durch einen an die Leitung 53a angeschlossenen Drucksensor 55a überwacht, der die jeweiligen Druckwerte über eine Meldeleitung 56a an das Achsreglermodul 50a meldet.

Abschlussdeckelseitig wird der erste Linearantrieb 10 durch den Stellmitteln 52a entsprechende Stellmittel 57a über eine Leitung 58a mit Druckluft beaufschlagt oder entlüftet. Die Stellmittel 57a werden über eine Steuerleitung 59a von dem Achsreglermodul 50a gesteuert. Der abschlussdeckelseitig anstehende Druck wird durch einen an die Leitung 58a angeschlossenen Drucksensor 60a überwacht, der die jeweiligen Druckwerte über eine Meldeleitung 61a an das Achsreglermodul 50a meldet. Die Drucksensoren 60a und 55a können aber auch direkt am Arbeitszylinder des Linearantriebs 10 angebracht sein. Bei einer Regelung ohne Drucksensorik kann auf die Drucksensoren 60a und 55a auch verzichtet werden. Die Stellmitteln 52a und die Stellmittel 57a können auch beispielsweise als ein einziges 5/3-Proportionalventil realisiert sein.

Über eine Steuer- und Meldeverbindung 62a ist das Achsreglermodul 50a mit einem Bus 70 verbunden. Anstatt des Busses 70 können auch individuelle Verbindungsleitungen vorgesehen sein. An den Bus 70 sind ferner ein Zentral-Steuermodul 71 über eine bidirektionale Verbindung 72 angeschlossen sowie ein zentrales Kompensationsregelmodul 73 über eine bidirektionale Verbindung 74. Dem Zentral-Steuermodul 71 können über eine Schnittstelle 75 Positions-Sollwerte, vorzugsweise in kartesischen Weltkoordinaten, für den Endeffektor 13 vorgegeben werden. An die Schnittstelle 75 kann beispielsweise ein Bediener-Terminal mit Tastatur, Maus und Monitor oder ein übergeordneter Leitrechner angeschlossen werden. Das Zentral-Steuermodul 71 und das Kompensationsregelmodul 73 werden von den Achsreglermodulen 50a, 50b und 50c sowohl mit von den Drucksensoren 52a, 60a, 52b, 60b, 52c und 60c gemeldeten Druckmesswerten als auch mit von den Sensoren 51a, 51b und 51c ermittelten Positionsmesswerten versorgt. Es ist auch möglich, dass das Zentral-Steuermodul 71 und das Kompensationsregelmodul 73 jeweils direkt mit den genannten Sensoren verbunden sind. Ferner kann das Zentral-Steuermodul 71 oder auch jedes der Achsreglermodule 50a, 50b und 50c anhand der jeweiligen Positionsmesswerten die momentane Beschleunigung und die momentane Geschwindigkeit der Läufer 14a, 14b und 14c ermitteln.

Wird dem Zentral-Steuermodul 71 über die Schnittstelle 75 ein Vorgabewert für eine einzustellende Position für den Endeffektor 13 vorgegeben, ermittelt das Zentral-Steuermodul 71 aus dem Vorgabewert einzustellende Achspositions-Sollwerte für die einzelnen Achsen der Linearantriebe 10, 11 und 12.

Dabei werden gegebenenfalls kartesische Koordinaten in auf das parallelkinematische System oder den Endeffektor 13 bezogene Koordinaten umgerechnet. Ferner berücksichtigt das Zentral-Steuermodul 71 mögliche Kollisionen und ermittelt eine Bahnkurve für den Endeffektor 13, bei dem keine Kollisionen auftreten können. Das Zentral-Steuermodul 71 übermittelt dann den Achsreglermodulen 50a, 50b und 50c jeweils eine Sequenz von Achspositions-Sollwerten, die die Achsreglermodule 50a, 50b und 50c an den ihnen jeweils zugeordneten Linearantrieben 10, 11 und 12 einzustellen haben. Ferner werden die Sequenzen von Achspositions-Sollwerten auch an das Kompensationsregelmodul 73 übertragen.

Die Achsreglermodule 50a, 50b und 50c stellen dann die Achspositions-Sollwerte jeweils durch Ansteuerung der Stellmittel 52a, 57a, 52b, 57b, 52b und 57c entsprechend ein, wobei die Achsreglermodule 50a, 50b und 50c jeweils die momentane Position des jeweiligen Läufers 14a, 14b und 14c sowie die momentan vorhandenen Druckverhältnisse als auf den jeweiligen Linearantrieb einwirkende Kräfte berücksichtigen. Ferner ermitteln die Achsreglermodule 50a, 50b und 50c z.B. anhand der einzustellenden Läufergeschwindigkeit, welche Reibkräfte jeweils zwischen den Kolben und den Profilstäben 16a, 16b und 16c sowie zwischen diesen und den Läufern 14a, 14b und 14c auftreten. Davon abhängig wird dann den Linearantrieben 10, 11 und 12 entsprechend mehr oder weniger Druckluft zugeführt. Insgesamt können die Achsreglermodule 50a, 50b und 50c jedoch sehr leicht dimensioniert werden, weil diese nämlich nur jeweils einen Linearantrieb unter Berücksichtigung einer einzigen Achsrichtung regeln.

Bei Bedarf kann dem Zentral-Steuermodul 71 über die Schnittstelle 75 auch vorgegeben werden, welche Beschleunigung der Endeffektor 13 erfahren darf. Davon abhängig gibt das Zentral-Steuermodul 71 den Achsreglermodulen 50a, 50b und 50c dann modifizierte Sequenzen von Achspositions-Sollwerten vor. Es ist jedoch auch möglich, dass den Achsreglermodulen 50a, 50b und 50c Sollwerte für die jeweilige Beschleunigung des ihnen zugeordneten Linearantriebs vorgegeben werden, die die Achsreglermodule 50a, 50b und 50c dann bei der Steuerung der jeweiligen Stellmittel berücksichtigen.

Anhand der von dem Zentral-Steuermodul 71 erhaltenen Achspositions-Sollwerte ermittelt das Kompensationsregelmodul 73, welche Nichtlinear-Kräfte, also welche Gravitationskräfte, Zentrifugalkräfte, Corioliskräfte und wechselseitig durch die Linearantriebe 10, 11 und 12 ausgeübte Koppelkräfte auf den Endeffektor 13 wirken. Zur Kompensation dieser Kräfte kann das Kompensationsregelmodul 73 in einer Funktion als Steuerung ohne Rückkopplung den Achsreglermodulen 50a, 50b und 50c jeweils an den Stellmitteln 52a, 57a, 52b, 57b, 52b und 57c einzustellende Druckkorrekturwerte senden, so dass die Nichtlinear-Kräfte kompensiert werden. Das Kompensationsregelmodul 73 erfasst jedoch die von den Achsreglermodule 50a, 50b und 50c gemeldeten aktuellen Druckmesswerte und Positionsmesswerte und wertet diese in einer Funktion als Regler zur Ermittlung der Druckkorrekturwerte aus. Dabei gibt das Kompensationsregelmodul 73 jedoch zweckmäßigerweise nur solche Druckkorrekturwerte vor, die die Achsreglermodule 50a, 50b und 50c zum Ausgleich derjenigen Nichtlinear-Kräfte benötigen, die durch die Verkoppelung über den Endeffektor 13 entstehen. Zur Vorgabe solcher Druckkorrekturwerte weisen die Achsreglermodule 50a, 50b und 50c einen dafür vorgesehenen Eingang auf. Die Achsreglermodule 50a, 50b und 50c müssen daher nicht zur Ermittlung von durch die Verkoppelung über den Endeffektor 13 hervorgerufenen Druckkorrekturwerte ausgelegt sein.

Es ist auch möglich, dass an dem Endeffektor 13 sowie beispielsweise auch an den Verbindungsstäben 20a und 21a jeweils z.B. Zugkraft- oder Gravitationssensoren angeordnet sind, die dem Kompensationsregelmodul 73 Messewerte zur Ermittlung von Nichtlinear-Kräften melden. Ferner kann das Zentral-Steuermodul 71 auch anhand der Druckmesswerte der Linearantriebe 10, 11 und 12 ermitteln, welche Kräfte momentan jeweils auf die Läufer 14a, 14b und 14c und damit auf den Endeffektor 13 einwirken. Weiter kann an dem Endeffektor 13 eine Kollisionssensorik, z.B. aus Ultraschall- oder Radarsensoren, angebracht sein, die dem Zentral-Steuermodul 71 im Aktionsbereich des Endeffektors 13 liegende, eventuell eine Kollision bedingende Gegenstände meldet.

Die Art der Aufgliederung in einzelne Module der Steuereinrichtung 40 in Figur 2 ist lediglich beispielhaft zu verstehen, eine weitere Untergliederung, das Hinzufügen weiterer Funktionsmodule oder eine andere Gruppierung der Module sind ohne Weiteres möglich. Beispielsweise kann ein zentrales Umrechnungsmodul zur Umrechung zwischen kartesischen und auf das parallelkinematische System oder den Endeffektor 13 bezogenen Koordinaten und umgekehrt vorgesehen sein, das die anderen Module bedient. Weiter können die Achsreglermodule 50a, 50b und 50c, das Zentral-Steuermodul 71 und das zentrale Kompensationsregelmodul 73 auch als Programm-Module ausgebildet sein, die von einem zentralen Prozessor ausgeführt werden. Ferner können je nach geforderter Regelgenauigkeit die Messung der momentanen Druckverhältnisse an den Linearantrieben 10, 11 und 12 vollständig oder teilweise entfallen.

## Patentansprüche

1. Parallelkinematisches System, bei dem zumindest zwei Aktuatoren (10, 11, 12) parallelkinematisch positionierend auf eine Endeffektor-Vorrichtung (13) wirken und jeweils mit dieser durch Verbindungsmittel (20a; 21a; 23a, 23b, 23c-26a, 26b, 26c) in zumindest zwei Bewegungsfreiheitsgraden gelenkig verbunden sind und bei dem die Aktuatoren (10, 11, 12) jeweils einen durch einen Stator (15a, 15b, 15c) entlang einer Längsbewegungsachse geführten Läufer (14a, 14b, 14c) aufweisen, dadurch gekennzeichnet, dass die Aktuatoren (10, 11, 12) als durch fluidische Antriebswirkung angetriebene Antriebe ausgebildet sind, dass pro Aktuator (10, 11, 12) jeweils kontinuierlich wirkende Stellmittel (27, 52a, 57a) zur Beeinflussung der fluidischen Antriebswirkung auf den Läufer (14a, 14b, 14c) vorgesehen sind, dass pro Aktuator (10, 11, 12) Positionserfassungsmittel (30a, 51a) zur Erfassung der Position des Läufers (14a, 14b, 14c) vorgesehen sind und dass eine Steuereinrichtung (40) zur Steuerung der Stellmittel (27, 52a, 57a) in Abhängigkeit von den jeweiligen von den Positionserfassungsmitteln (30a, 51a) erfassten und an die Steuer-einrichtung (40) gemeldeten Positionen der Läufer (14a, 14b, 14c) vorgesehen sind, so dass die Endeffektor-Vorrichtung (13) durch Positionieren der Läufer (14a, 14b, 14c) relativ zu den ihnen zugeordneten Statoren (15a, 15b, 15c) positionierbar ist.

2. Parallelkinematisches System nach Anspruch 1, dadurch gekennzeichnet, dass die Steuereinrichtung (40) derart zur Steuerung der Aktuatoren (10, 11, 12) über die Stellmittel (27, 52a, 57a) ausgestaltet ist, dass die Endeffektor-Vorrichtung (13) bei ihrer Positionierung entlang einer vorbestimmten Bewegungsbahn bewegt wird.

3. Parallelkinematisches System nach Anspruch 1 oder 2, dadurch gekennzeichnet, dass die Steuereinrichtung (40) derart ausgestaltet ist, dass sie die Aktuatoren (10, 11, 12) über die Stellmittel (27, 52a, 57a) in Abhängigkeit von zumindest einem vorbestimmten Beschleunigungswert für die Endeffektor-Vorrichtung (13) ansteuert.

4. Parallelkinematisches System nach einem der Ansprüche 1 bis 3, dadurch gekennzeichnet, dass zumindest einem Aktuator (10, 11, 12) ein Achsreglermodul (50a, 50b, 50c) der Steuer-einrichtung (40) zugeordnet ist, das in Abhängigkeit von der jeweiligen von den Positionserfassungsmitteln (30a, 51a) als Positions-Ist-Wert erfassten Position des Läufers (14a, 14b, 14c) und einem durch ein Zentral-Steuermodul der Steuereinrichtung (40) vorgegebenen Positions-Sollwert die Stellmittel (27, 52a, 57a) des Läufers (14a, 14b, 14c) steuert.

5. Parallelkinematisches System nach einem der Ansprüche 1 bis 4, dadurch gekennzeichnet, dass Krafterfassungsmittel (55a, 60a) zur Erfassung und zur Meldung an die Steuereinrichtung (40) von Messwerten bezüglich zumindest einer auf zumindest einen Aktuator (10, 11, 12) einwirkenden Kraft vorgesehen sind.

6. Parallelkinematisches System nach Anspruch 4 und 5, dadurch gekennzeichnet, dass mindestens ein Achsreglermodul (50a, 50b, 50c) zur Auswertung der von den Krafterfassungsmitteln (55a, 60a) gemeldeten Messwerte bezüglich der zumindest auf einen Aktuator (10, 11, 12) einwirkenden Kraft ausgebildet ist.

7. Parallelkinematisches System nach einem der Ansprüche 1 bis 6, dadurch gekennzeichnet, dass die Steuereinrichtung (40) zur Steuerung der Stellmittel (27, 52a, 57a) in Abhängigkeit von auf die Endeffektor-Vorrichtung (13) wirkenden Nichtlinear-Kräften, insbesondere Gravitationskräften, Zentrifugalkräften, Corioliskräften und Koppelkräften, ausgebildet ist.

8. Parallelkinematisches System nach Anspruch 7, dadurch gekennzeichnet, dass die Steuereinrichtung (40) ein Kompensationsregelmodul (73) aufweist, das zur Kompensation von auf die Endeffektor-Vorrichtung (13) wirkenden Nichtlinear-Kräften in Abhängigkeit von den durch die Positionserfassungsmittel (30a, 51a) und/oder von den durch die Krafterfassungsmittel (55a, 60a) erfassten und gemeldeten Werten die Stellmittel (27, 52a, 57a) ansteuert.

9. Parallelkinematisches System nach Anspruch 8, dadurch gekennzeichnet, dass das Kompensationsregelmodul (73) und das zumindest eine Achsreglermodul (50a, 50b, 50c) derart ausgestaltet sind, dass das Kompensationsregelmodul (73) dem zumindest einen Achsreglermodul (50a, 50b, 50c) Kompensationswerte zur Kompensation von auf die Endeffektor-Vorrichtung (13) wirkenden Nichtlinear-Kräften vorgibt, in deren Abhängigkeit das zumindest eine Achsreglermodul (50a, 50b, 50c) die Stellmittel (27, 52a, 57a) des ihm zugeordneten Aktuators (10, 11, 12) steuert.

10. Parallelkinematisches System nach einem der Ansprüche 1 bis 9, dadurch gekennzeichnet, dass die Steuereinrichtung (40) Transformationsmittel (42) für eine Transformation von kartesischen Koordinaten in auf die Endeffektor-Vorrichtung (13) bezogenen Koordinaten und umgekehrt aufweist.

11. Parallelkinematisches System nach einem der Ansprüche 1 bis 10, dadurch gekennzeichnet, dass die vorzugsweise von den jeweiligen Gehäusen der Aktuatoren (10, 11, 12) gebildeten Statoren (15a, 15b, 15c) tragende Bestandteile der Gestellstruktur des parallelkinematischen Systemes bilden.

12. Parallelkinematisches System nach Anspruch 11, dadurch gekennzeichnet, dass die Statoren (15a, 15b, 15c) säulenartig angeordnet sind und vorzugsweise durch sie verbindende Stützmittel (8, 9) gegeneinander abgestützt sind.

13. Parallelkinematisches System nach einem der Ansprüche 4 bis 12, dadurch gekennzeichnet, dass das zumindest eine Achsreglermodul (50a, 50b, 50c) die Stellmittel (27, 52a, 57a) des ihm zugeordneten Aktuators (10, 11, 12) in Abhängigkeit von den zwischen Läufer (14a, 14b, 14c) und Stator (15a, 15b, 15c) des Aktuators (10, 11, 12) auftretenden Reibkräften steuert.

14. Parallelkinematisches System nach einem der Ansprüche 1 bis 13, dadurch gekennzeichnet, dass die Verbindungsmittel (20a; 21a; 23a, 23b, 23c - 26a, 26b, 26c) jeweils als zueinander parallele Verbindungsstangen ausgebildet sind.

15. Parallelkinematisches System nach einem der Ansprüche 1 bis 14, dadurch gekennzeichnet, dass die Verbindungsmittel (20a; 21a; 23a, 23b, 23c - 26a, 26b, 26c) jeweils zumindest ein Kugelgelenk oder Kardangelenk aufweisen.

16. Parallelkinematisches System nach einem der Ansprüche 1 bis 15, dadurch gekennzeichnet, dass zumindest drei Aktuatoren (10, 11, 12) vorgesehen sind, deren Statoren (15a, 15b, 15c) vorzugsweise säulenartig angeordnet sind und dabei vorzugsweise ein Prisma auf der Grundfläche eines gleichschenkligen Dreiecks bilden oder parallel nebeneinander liegend angeordnet sind.

17. Verfahren zum Betreiben eines parallelkinematischen Systems, bei dem zumindest zwei Aktuatoren (10, 11, 12) parallelkinematisch positionierend auf eine Endeffektor-Vorrichtung (13) wirken und jeweils mit dieser durch Verbindungsmittel (20a; 21a; 23a, 23b, 23c - 26a, 26b, 26c) in zumindest zwei Bewegungsfreiheitsgraden gelenkig verbunden sind und bei dem die Aktuatoren (10, 11, 12) jeweils einen durch einen Stator (15a, 15b, 15c) entlang einer Längsbewegungsachse geführten Läufer (14a, 14b, 14c) aufweisen, dadurch gekennzeichnet, dass die Läufer (14a, 14b, 14c) jeweils durch fluidische Antriebswirkung angetrieben werden, dass die fluidische Antriebswirkung auf den jewei-ligen Läufer (14a, 14b, 14c) jeweils durch kontinuierlich wirkende Stellmittel (27, 52a, 57a) beeinflusst wird, dass die Position des jeweiligen Läufers (14a, 14b, 14c) durch Positionserfassungsmittel (30a, 51a) erfasst wird und an eine Steuereinrichtung (40) gemeldet wird und dass die Steuer-einrichtung (40) in Abhängigkeit von den gemeldeten Posi-tionen der Läufer (14a, 14b, 14c) die Stellmittel (27, 52a, 57a) derart ansteuert, dass die Endeffektor-Vorrichtung (13) durch Positionieren der Läufer (14a, 14b, 14c) relativ zu den sie jeweils führenden Statoren (15a, 15b, 15c) positionier-bar ist.

18. Verfahren nach Anspruch 17, dadurch gekennzeichnet, dass die Stellmittel (27, 52a, 57a) derart angesteuert werden, dass die Positionierbewegung der Endeffektor-Vorrichtung (13) einer vorgegebenen Bewegungsbahn folgt.

19. Steuereinrichtung (40) für ein parallelkinematisches System, bei dem zumindest zwei Aktuatoren (10, 11, 12) parallelkinematisch positionierend auf eine Endeffektor-Vorrichtung (13) wirken und jeweils mit dieser durch Verbindungsmittel (20a; 21a; 23a, 23b, 23c - 26a, 26b, 26c) in zumindest zwei Bewegungsfreiheitsgraden gelenkig verbunden sind und bei dem die Aktuatoren (10, 11, 12) jeweils einen durch einen Stator (15a, 15b, 15c) entlang einer Längsbewegungsachse geführten Läufer (14a, 14b, 14c) aufweisen, dadurch gekennzeichnet, dass die Steuereinrichtung (40) zum Empfangen und zur Auswertung von Positionsmesswerten ausgebildet ist, die die jeweilige Position der Läufer (14a, 14b, 14c) der Aktuatoren (10, 11, 12) repräsentieren und die von Positionserfassungsmitteln (30a, 51a) an die Steuereinrichtung (40) gemeldet werden, und dass die Steuereinrichtung (40) derart ausgestaltet ist, dass sie Stellmittel, über die jeweils eine fluidische Antriebswirkung auf den jeweiligen Läufer (14a, 14b, 14c) kontinuierlich beeinflussbar ist, in Abhängigkeit von den durch die jeweiligen Positionserfassungsmittel (30a, 51a) erfassten und an die Steuereinrichtung (40) gemeldeten Positionen der Läufer (14a, 14b, 14c) so ansteuern kann, dass die Endeffektor-Vorrichtung (13) durch Positionieren der Läufer (14a, 14b, 14c) relativ zu sie führenden Statoren (15a, 15b, 15c), insbesondere entlang einer vorgegebenen Bewegungsbahn, positionierbar ist.

20. Programm-Modul für ein parallelkinematisches System, bei dem zumindest zwei Aktuatoren (10, 11, 12) parallelkinematisch positionierend auf eine Endeffektor-Vorrichtung (13) wirken und jeweils mit dieser durch Verbindungsmittel (20a; 21a; 23a, 23b, 23c - 26a, 26b, 26c) in zumindest zwei Bewegungsfreiheitsgraden gelenkig verbunden sind und bei dem die Aktuatoren (10, 11, 12) jeweils einen durch einen Stator (15a, 15b, 15c) entlang einer Längsbewegungsachse geführten Läufer (14a, 14b, 14c) aufweisen, wobei das Programm-Modul Programmcode enthält, der von einem Steuermittel (42) einer Steuereinrichtung (40) des parallelkinematischen Systems ausgeführt werden kann, dadurch gekennzeichnet, dass das Programm-Modul eine Empfangsfunktion aufweist, die derart ausgestaltet ist, dass die Steuereinrichtung (40) Positionsmesswerte empfangen kann, die die jeweilige Position der Läufer (14a, 14b, 14c) der Aktuatoren (10, 11, 12) repräsentieren und die von Positionserfassungsmitteln (30a, 51a) an die Steuereinrichtung (40) gemeldet werden, und dass das Programm-Modul eine Steuerfunktion aufweist, die derart ausgestaltet ist, dass die Steuereinrichtung (40) Stellmittel, über die jeweils eine fluidische Antriebswirkung auf den jeweiligen Läufer (14a, 14b, 14c) kontinuierlich beeinfluss-bar ist, in Abhängigkeit von den durch die jeweiligen Positionserfassungsmitteln (30a, 51a) erfassten und an die Steuereinrichtung (40) gemeldeten Positionen der Läufer (14a, 14b, 14c) so ansteuern kann, dass die Endeffektor-Vorrichtung (13) durch Positionieren der Läufer (14a, 14b, 14c) relativ zu den ihnen zugeordneten Statoren (15a, 15b, 15c), insbesondere entlang einer vorgegebenen Bewegungsbahn, positionierbar ist.
